(19) Europäisches Patentamt
European Patent Office
Office européen des brevets

(11) Publication number : **0 478 387 A2**

# (12) EUROPEAN PATENT APPLICATION

(21) Application number : **91308891.0**

(22) Date of filing : **27.09.91**

(51) Int. Cl.$^5$ : **C09K 19/20,** C09K 19/30, C09K 19/32, C09K 19/46

(30) Priority : **28.09.90 JP 262363/90**

(43) Date of publication of application : **01.04.92 Bulletin 92/14**

(84) Designated Contracting States : **CH DE FR GB LI NL**

(71) Applicant : **SHARP KABUSHIKI KAISHA**
**22-22 Nagaike-cho Abeno-ku**
**Osaka 545 (JP)**

(72) Inventor : **Koden, Mitsuhiro**
**2-1-30-503, 5-chome, Sujaku**
**Nara-shi, Nara-ken (JP)**
Inventor : **Taniguchi, Tsuhiro**
**229-9, Hikida, Shijo-cho**
**Kitakatsuragi-gun, Nara-ken (JP)**

(74) Representative : **West, Alan Harry et al**
**R.G.C. Jenkins & Co. 26 Caxton Street**
**London SW1H 0RJ (GB)**

## (54) Ferroelectric liquid crystal composition and use thereof.

(57) A ferroelectric liquid crystal composition comprising at least one kind of compounds represented by the general formula (I) :

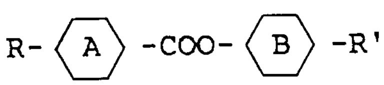 (I)

wherein

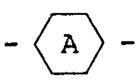

is 1,4-phenylene or 1,4-cyclohexylene,

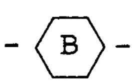

is 1,4-phenylene or 2,6-naphthylene, R and R′ are, the same or different, a straight or branched chain alkyl or alkyloxy group having 4 to 15 carbon atoms, and at least one kind of compounds represented by the general formula (II) :

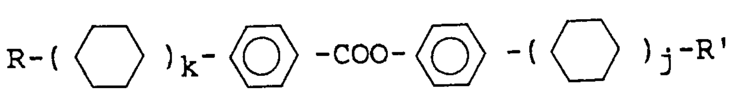 (II)

wherein k and j are independently 0 or 1 in which k + j = 1, and R and R′ are, the same or different, a straight or branched chain alkyl or alkyloxy group having 4 to 15 carbon atoms. This composition is used for a ferroelectric liquid crystal device.

EP 0 478 387 A2

## BACKGROUND OF THE INVENTION

### 1. Field of the Invention

The present invention relates to a ferroelectric liquid crystal composition and a use thereof.

### 2. Description of the Prior Art

Liquid crystal display devices most widely used presently are those utilizing nematic phase. However, twisted nematic (TN) liquid crystal devices decrease in contrast with an increase in the number of lines, so that it is practically impossible to fabricate large-capacity liquid crystal devices. To improve TN liquid crystal display devices, supertwisted nematic (STN) liquid crystal display devices and double-layer supertwisted nematic (DSTN) liquid crystal display devices have been developed, whereas these devices still have the drawback of decreasing in contrast and in the response speed with increasing number of lines. Therefore, such devices are limited to a display capacity of about 800 x 1024 lines. On the other hand, the prior art has already provided liquid crystal display devices of the active matrix type wherein thin-film transistors (TFT) are arranged on a substrate. Although it is technically possible to give devices of this type a large display capacity, for example, of 1000 x 1000 lines, these devices have the drawback of necessitating a long production process and being low in yield and therefore very costly to fabricate. Further, it seems difficult to fabricate a large-capacity display device of this type, e.g., 2000 x 2000 lines, in view of the restriction caused by the mobility of semiconductor.

On the other hand, a ferroelectric liquid crystal display device having a display capacity of more than 2000 x 2000 lines has been proposed as promising means [see N.A. Clark et al., Appl. Phys. Lett., 36, 899(1980)]. The proposed device utilized a chiral smectic C phase or chiral smectic I phase which is a ferroelectric liquid crystal. The device can be given a great display capacity with an improved response speed since the memory property of the crystal is utilized. Furthermore, the device can be produced at a low cost since it does not need to use active components such as thin-film transistors. The ferroelectric liquid crystal display device also offers the wider field of view. Thus, the device appears very promising as a large-capacity display device realizing the concept of WYSIWYG "What you see is what you get".

The ferroelectric liquid crystal display device has the above-mentioned advantages. However, there arises the following problems in order to establish a display without flickering by using a large-capacity display device having more than 1000 x 1000 lines.

One method for performing a display without flickering is to change one screen at 16.7 msec (60 Hz). In this case, the ferroelectric liquid crystal is required to have a very high response speed. For example, a high response speed of 8.4 μm is required as seen by the following equation in the case where the display has 1000 scanning lines.

$$16.7\ (\text{msec}) \div 1000 \div 2 = 8.4\ \mu\text{m}$$

The reason why the response speed per scanning line is divided by two is that at least 2 pulses are required for writing in the ferroelectric liquid crystal display device.

Accordingly, a goal in research and development of the ferroelectric liquid crystal has been to realize high-speed responsiveness. In order to improve the response speed, it has been found that, preferably, the ferroelectric liquid crystal composition is prepared by adding a chiral compound which has a high spontaneous polarization into a low-viscosity non-chiral liquid crystal composition which exhibits a smectic C phase. Pyrimidine compounds have often been employed for a component in the non-chiral liquid crystal composition [e.g., Ohnishi et al., National Technical Report, 33, 35 (1987)].

However, it is by no means easy at present to improve the ferroelectric liquid crystal having the desired response speed. When a display device having a larger capacity is fabricated, response speed must be much higher. In view of this, difficulties lie in realizing a large-capacity display device only by a high-speed responsiveness of the liquid crystal.

A localized rewriting method has been proposed as another effective method to solve these problems (Kanbe, The Institute of Electronics, Information and Communication Engineers Expert Training Meeting Lecture Papers "Optelectronics"-Liquid Crystal Display and The Materials Thereof-, January in 1990, pp.18-26), wherein a signal is applied only to images on the screen which should be changed. This can make it possible to manufacture a high-speed responsive display device which is capable of following the movement of a mouse for displaying graphics.

However, a bias voltage which is one-third of the writing voltage is applied to a pixel which is not rewritten (this process is hereinafter referred to as 1/3 bias driving method) when the localized rewriting method is employed to obtain a display without flickering.

Fig. 1 shows one example of the 1/3 bias driving method proposed in Japanese Unexamined Patent Publication No. SHO 64(1989)-59389. Specifically, ferroelectric liquid crystals are interposed between a plurality of scanning electrodes L and a plurality of signal electrodes S, both of which are arranged to intersect with each other. The ferroelectric liquid crystals at the intersection of the scanning electrode L with the signal electrode S are defined as pixels. A waveform signal voltage corresponding to the display data is applied to the signal electrode S, while a waveform selective voltage which can rewrite the display of the pixels thereon is applied to the scanning electrode L in a line sequential manner.

In this driving method, a waveform shown in Fig. 1 (1) is applied to the scanning electrode L. The orientation direction of the pixel is changed upon the application of the voltage. This direction is unchanged even if the application of the voltage is discontinued (This state is hereinafter referred to as "memory state").

Fig. 1 (1) shows a waveform of a selective voltage A which is able to rewrite a memory state of the pixel on the scanning electrode L, i.e., to rewrite the display luminance. Fig. 1 (2) shows a waveform of a non-selective voltage B which is unable to rewrite the memory state of the pixel on the scanning electrode L, i.e., the display luminance. This waveform is applied to the scanning electrode L. Fig. 1 (3) shows a waveform of a rewriting bright voltage C applied to the signal electrode S for changing the pixel into "bright" luminance. Fig. 1 (4) shows a waveform of rewriting dark voltage D applied to the signal electrode S for changing the pixel into "dark" luminance. Fig. 1 (5) shows a waveform of non-rewriting voltage G applied to the signal electrode S when the pixel is not rewritten. Figs. 1 (6) to (11) show waveforms of effective voltages applied to a pixel $P_{ij}$. The waveform A - C in Fig. 1 (6) is the one when the selective voltage A is applied to the scanning electrode $L_i$, while the rewriting bright voltage C is applied to the signal electrode $S_j$. The waveform A - D in Fig. 1 (7) is the one when the selective voltage A is applied to the scanning electrode $L_i$, while the rewriting dark voltage D is applied to the signal electrode $S_j$. The waveform A - G in Fig. 1 (8) is the one when the selective voltage A is applied to the scanning electrode $L_i$, while the non-rewriting voltage G is applied to the signal electrode $S_j$. The waveform B - C in Fig. 1 (9) is the one when the non-selective voltage B is applied to the scanning electrode $L_i$, while the rewriting bright voltage C is applied to the signal electrode $S_j$. The waveform B - D in Fig. 1 (10) is the one when the non-selective voltage B is applied to the scanning electrode $L_i$, while the rewriting dark voltage D is applied to the signal electrode $S_j$. The waveform B - G in Fig. (11) is the one when the non-selective voltage B is applied to the scanning electrode $L_i$, while the non-rewriting voltage G is applied to the signal electrode $S_j$.

Accordingly, the voltage waveform shown in Fig. 1 (6) is applied to the pixel which changes the "dark" display into "bright" display, while the voltage waveform in Fig. 1 (7) is applied to the pixel which changes the "bright" display into "dark" display. Applied to the other pixels is the voltage waveform of any one of Figs. 1 (8), (9), (10) and (11). In the case of the waveforms shown in Figs. 1 (6) and (7), the voltage of $3V_D$ or $-3V_D$ is applied. However, the voltage of $V_D$ or $-V_D$ which is one-third of the voltageof Figs. 1 (6) and (7) is applied in the case of the waveforms of Figs. 1 (8), (9), (10) and (11). Therefore, the use of these waveforms eliminates the peak value among the voltage waveforms of (8), (9), (10) and (11) which are used for unchanging the display, whereby the display without flickering can be given.

The problem in this 1/3 bias driving method will be described below. Specifically, 1/3 bias voltage is also applied to the pixel which is not rewritten. This bias voltage causes a flicker in the molecular of the pixel which is not rewritten, thereby decreasing contrast. For example, a conventional ferroelectric liquid crystal display produced experimentally by using the localized rewriting method offers a contrast of only 5 : 1 (Kanbe, The Institute of Electronics, Information and Communication Engineers Expert Training Meeting Lecture Papers "Optelectronics"-Liquid Crystal Display and The Materials Thereof-, January in 1990, pp.18-26). Our inventors have manufactured various display devices using a great number of ferroelectric liquid crystals including ferroelectric liquid crystal compositions which contain a pyrimidine compound as its main component. However, there arises a problem that the contrast given by employing the 1/3 bias driving method is only 1.5 - 5. The device having such a contrast is unsatisfactory for sale on the market.

The present invention has been accomplished in view of the above situation, and provides a ferroelectric liquid crystal composition which can offer an excellent contrast in 1/3 bias driving method, and a use thereof.

## SUMMARY OF THE INVENTION

Our inventors have made earnest studies to solve the above problems, resulting in finding that the use of a ferroelectric liquid crystal composition containing as its main component a compound having an ester bonding can offer an excellent contrast in the 1/3 bias driving method.

Thus, the present invention provides a ferroelectric liquid crystal composition (1) comprising at least one kind of the compound represented by the general formula (I):

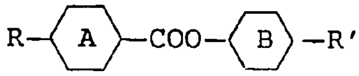

(I)

wherein

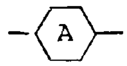

is 1,4-phenylene or 1,4-cyclohexylene,

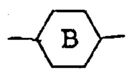

is 1,4-phenylene or 2,6-naphthylene, R and R′ are, the same or different a straight or branched chain alkyl or alkyloxy group having 4 to 15 carbon atoms, and at least one kind of the compound represented by the general formula (II):

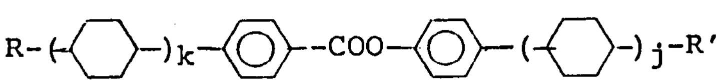

(II)

wherein k and j are independently 0 or 1 in which k + j = 1, and R and R′ are, the same or different, a straight or branched chain alkyl or alkyloxy group having 4 to 15 carbon atoms;

a ferroelectric liquid crystal composition (2) which is the ferroelectric liquid crystal composition (1) and further comprises at least one kind of compounds represented by the general formula (III):

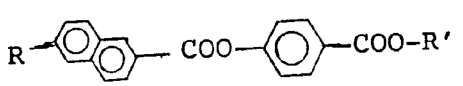

(III)

wherein R and R′ are, the same or different, a straight or branched chain alkyl or alkyloxy group having 4 to 15 carbon atoms;

a ferroelectric liquid crystal composition (3) which is either one of the ferroelectric liquid crystal composition (1) or the ferroelectric liquid crystal composition (2) and further comprises at least one kind selected from the group consisting of S-form of a compound represented by the general formula (IV):

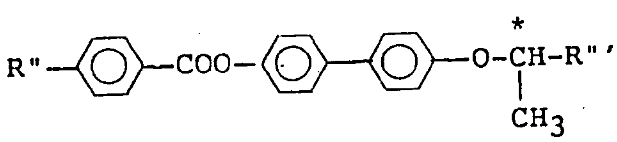

(IV)

wherein R″ is a straight or branched chain alkyl or alkyloxy group having 1 to 15 carbon atoms, R‴ is a straight or branched chain alkyl group having 2 to 15 carbon atoms, and * represents an asymmetric carbon atom, and R-form of a compound represented by the general formula (V):

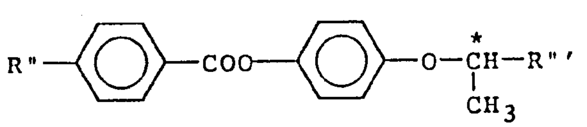

(V)

wherein R″ is a straight or branched chain alkyl or alkyloxy group having 1 to 15 carbon atoms, R‴ is a straight or branched chain alkyl group having 2 to 15 carbon atoms, and * represents an asymmetric carbon atom, and at least one kind selected from the group consisting of S-form of a compound represented by the general formula (VI):

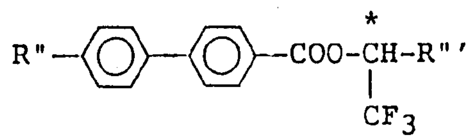

(VI)

wherein R″ is a straight or branched chain alkyl or alkyloxy group having 1 to 15 carbon atoms, R‴ is a straight or branched chain alkyl group having 2 to 15 carbon atoms, and * represents an asymmetric carbon atom, and S-form of a compound represented by the general formula (VII):

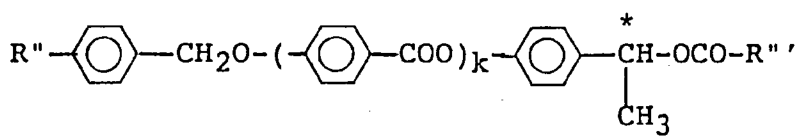

(VII)

wherein R″ is a straight or branched chain alkyl or alkyloxy group having 1 to 15 carbon atoms, R‴ is a straight or branched chain alkyl group having 2 to 15 carbon atoms, k is an integer of 0 or 1, and * represents an asymmetric carbon atom; or

a ferroelectric liquid crystal composition (4) which is either one of the ferroelectric liquid crystal composition (1) or (2) and further comprises at least one kind selected from the group consisting of the R-form of the compound (IV) and the S-form of the compound (V), and at least one kind selected from the group consisting of the S-form of the compound (VI) and the R-form of the compound (VII).

It has been said that ester compounds are disadvantageous for obtaining high-speed responsiveness due to high viscosity [Ohnishi et al., National Technical Report, 33, 35 (1987)]. However, our inventors have found that a high contrast can be given when a ferroelectric liquid crystal composition having ester compounds as its main component is used for displaying with the 1/3 bias driving method.

BRIEF DESCRIPTION OF THE DRAWINGS

Fig. 1 is a view of driving voltage waveforms showing one example of a 1/3 bias driving method for driving a ferroelectric liquid crystal device;

Fig. 2 is a view showing the structure of a ferroelectric liquid crystal device comprising a ferroelectric liquid crystal composition according to the present invention;

Fig. 3 is a view showing a process for manufacturing a large-capacity ferroelectric liquid crystal display device using the ferroelectric liquid crystal composition of the present invention; and

Fig. 4 is a view showing the 1/3 bias driving voltage waveform applied to the ferroelectric liquid crystal device for measuring the contrast.

PREFERRED EMBODIMENT OF THE INVENTION

In the compounds (I) to (III), the straight or branched chain alkyl or alkyloxy group having 1 to 15 carbon atoms includes an alkyl group such as butyl, i-butyl, pentyl, 1-or 2-methylbutyl, hexyl, 1- or 3-methylpentyl, heptyl, 1- or 4-methylexyl, octyl, 1-methylheptyl, nonyl, 1- or 6-methyloctyl, decyl, 1-methylnonyl, undecyl, 1-methyldecyl, dodecyl, 1-methylundecyl or the like and an alkyloxy group in which oxy group is bonded to these alkyl groups. The branched oxy chain allyl or alkyloxy groups may contain an asymmetric carbon atom. Further, one or more hydrogen atoms in these alkyl or alkyloxy groups may be substituted with a fluorine atom, chlorine atom, bromine atom, cyano group, nitro group, trifluoromethyl group, methoxy group or the like.

In order to exhibit ferroelectricity, the liquid crystal composition should have a tilted smectic phase such as a smectic C phase and contain an optically active compound. When a liquid crystal composition is prepared by using the compounds (I) and (II), a ferroelectric liquid crystal composition can be prepared if the compounds (I) and (II) include at least one kind of optically active component. Preferably, a non-chiral liquid crystal composition exhibiting the smectic C phase is prepared by employing the compounds (I) and (II), to which another optically active compound is added to complete a ferroelectric liquid crystal composition. The latter process is more convenient than the former one. Further, the latter process easily offers a ferroelectric liquid crystal composition having excellent properties. The optically active compound used in combination with the compounds (I) and (II) can be selected from a great number of known optically active compounds for a ferroelectric liquid crystal.

A ferroelectric liquid crystal device must have an excellent orientation of a liquid crystal. Therefore, it is necessary that the helical pitch in a nematic phase is sufficiently longer compared with the cell thickness. Accordingly, it is preferable to use an optically active compound in which a helical pitch induced in the nematic phase is longer than the cell thickness [e.g., Takehara, The 14th Liquid Crystal Discussion Transaction, 1B102, (1988)] or the one in which a helical pitch induced in the nematic phase is reversed [e.g., Ohnishi et al., National Technical Report, 33, 35 (1987)]. When the optically active compound in which the helical pitch induced in the nematic phase is reversed is employed in combination with the compounds (I) and (II), this compound preferably has the same direction of the spontaneous polarization appearing in the smectic C phase.

For example, Table 1 shows the direction of the spontaneous polarization and the direction of the helical pitch induced in the nematic phase in the optically active compounds (IV) to (VII). These can suitably be combined for use.

The straight or branched chain alkyl or alkyloxy groups having 4 to 15 carbon atoms in the compounds (IV) to (VII) are the same as those exemplified in the compounds (I) to (III). Examples of the straight or branched chain alkyl groups having 2 to 15 carbon atoms in the compounds (IV) to (VII) include ethyl, propyl, i-propyl, butyl, i-butyl, pentyl, 1- or 1-methylbutyl, hexyl, 1- or 3-methylpentyl, heptyl, 1- or 4-methylhexyl, octyl, 1-methylheptyl, nonyl, 1- or 6-methyloctyl, decyl, 1-methylnonyl, undecyl, 1-methyldecyl, dodecyl, 1-methylundecyl or the like. These alkyl groups may contain an asymmetric carbon atom on the carbon ring. Further, one or more hydrogen atoms in these alkyl or alkyloxy groups may be substituted with a fluorine atom, chlorine atom, bromine atom, cyano group, nitro group, trifluoromethyl group, methoxy group or the like.

Subsequently, preferable examples of the compounds of (I) to (VII) will be described hereinafter.

Examples of the compound (I) are as follows:

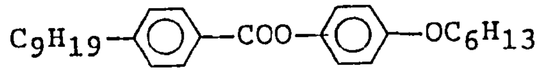

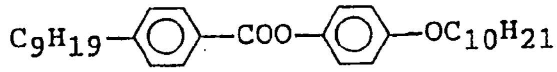

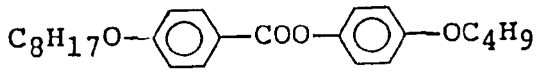

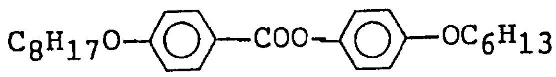

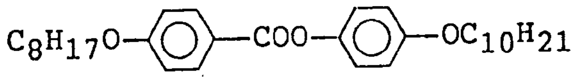

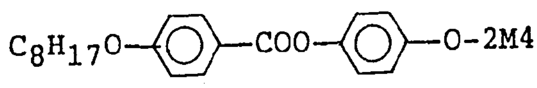

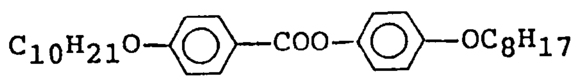

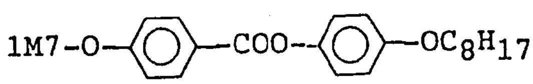

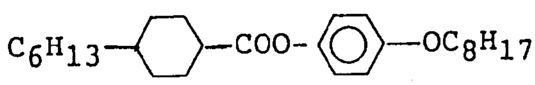

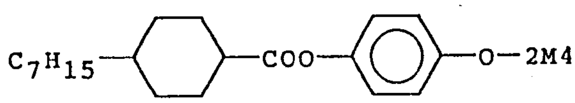

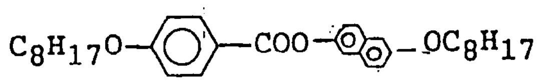

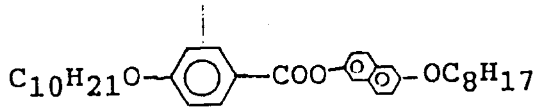

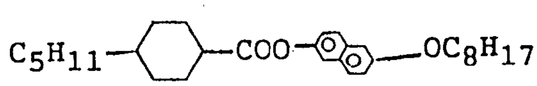

wherein 2M4 is 2-methylbutyl group and 1M7 is 1-methylheptyl group.

Examples of the compound (II) are as follows:

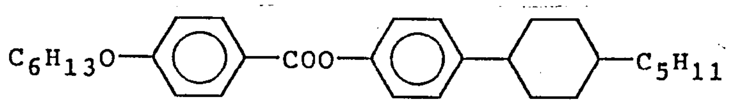

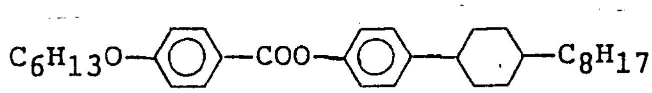

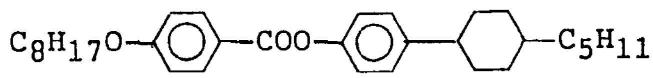

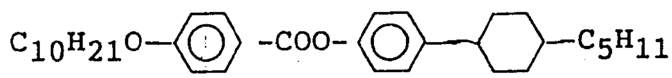

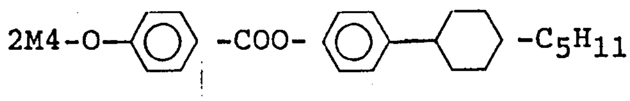

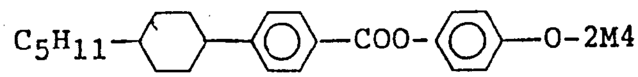

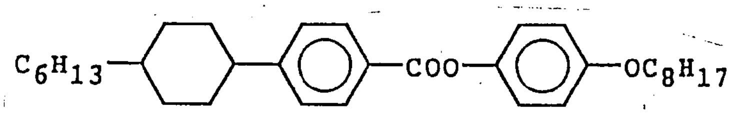

wherein 2M4 is 2-methylbutyl group.

Examples of the compound (III) are as follows.

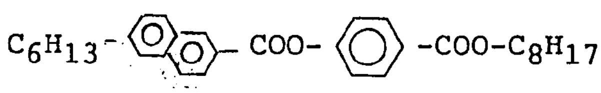

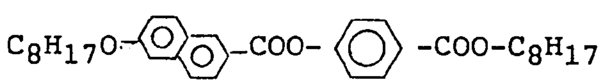

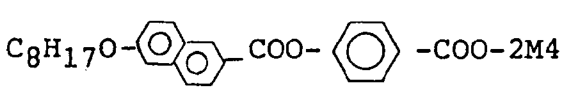

wherein 2M4 is 2-methylbutyl group.

Examples of the compound (IV) are as follows.

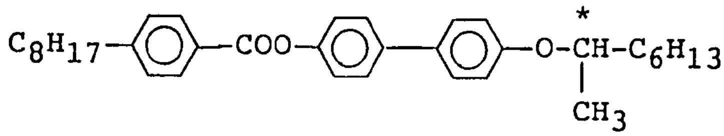

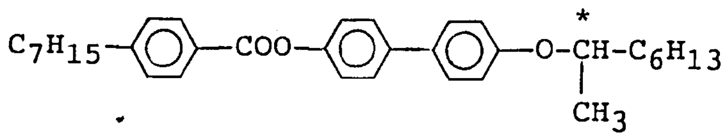

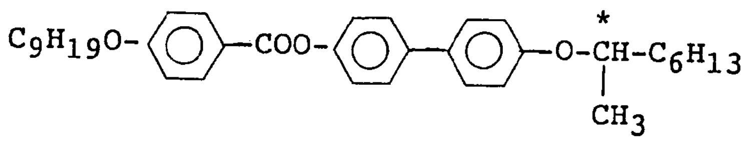

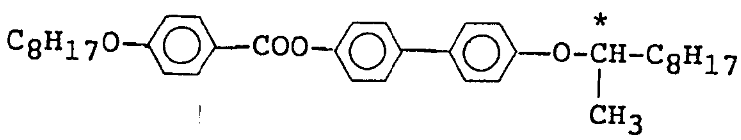

Examples of the compound (V) are as follows.

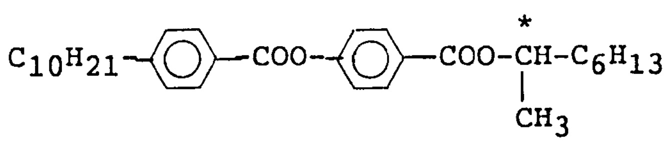

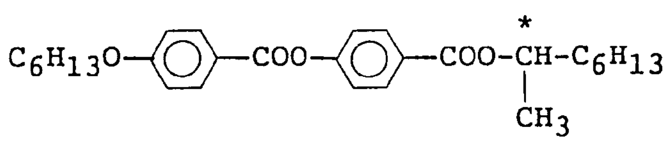

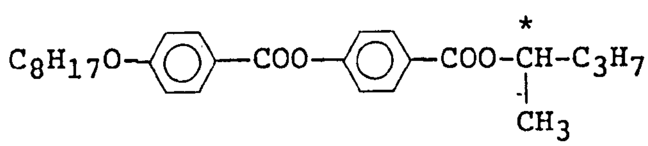

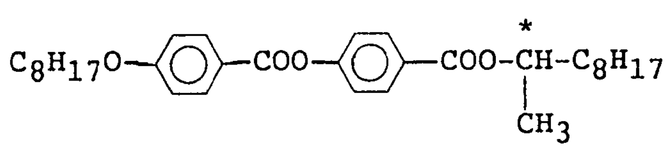

Examples of the compound (VI) are as follows.

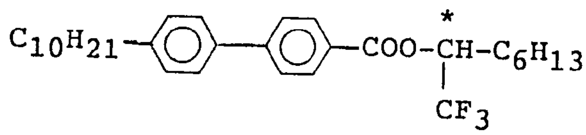

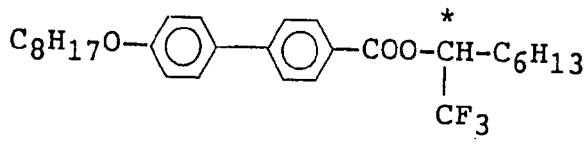

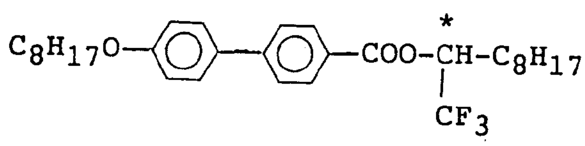

Examples of the compound (VII) are as follows.

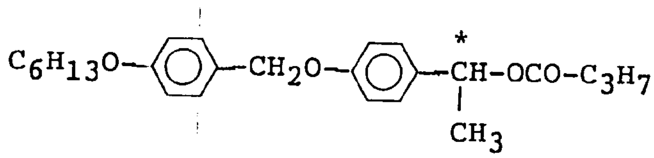

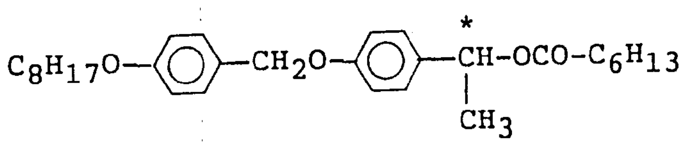

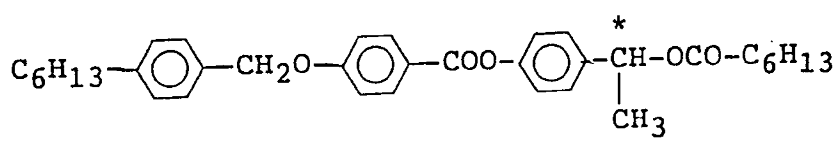

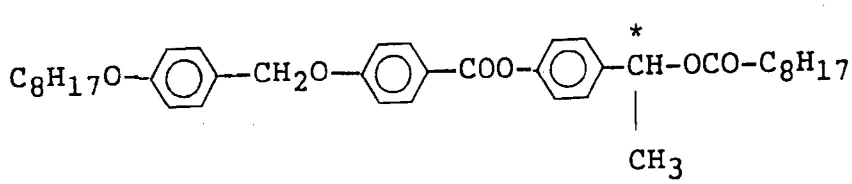

Subsequently, a preferable amount of each compound to be added will be explained.

The compound (I) has the advantage of having low melting point and exhibiting the smectic C phase over a wide temperature. Therefore, the compound (I) can be used as a main component of the ferroelectric liquid crystal composition of the present invention. However, it has the disadvantage of not exhibiting the smectic A phase. In order to obtain an excellent orientation in the ferroelectric liquid crystal device, it has been known that the liquid crystal device possesses INAC (Isotropic-Nematic-Smectic A-Smectic C) phase [e.g., Ohnishi et al., National Technical Report, 33, 35 (1987)]. From this viewpoint, much higher concentration of the compound (I) in the ferroelectric liquid crystal composition is unpreferable. Accordingly, the concentration of the compound (I) in the ferroelectric liquid crystal composition is preferably 40 to 80 wt.%, more preferably 45 to 70 wt.%.

The compound (II) has the advantage of high clearing point, thereby increasing the upper temperature limit

for the liquid crystal. The compound (II) easily exhibits the smectic A phase, whereby the INAC phase series can be realized when used in combination at a suitable ratio with the compound (I) which does not exhibit the smectic A phase. However, the compound (II) is higher than the compound (I) in the melting point. Increased concentration of the compound (II) in the ferroelectric liquid crystal composition may cause the precipitate of the crystal at room temperature. The compound (II) is assumed to have a viscosity higher than the compound (I), so that increased concentration of the compound (II) is not so advantageous. Therefore, the concentration of the compound (II) in the ferroelectric liquid crystal composition is preferably 10 to 50 wt.%, more preferably 15 to 30 wt.%.

The compound (III) easily exhibits the smectic A phase and is effective for realizing INAC phase series in combination with the compound (I), whereas it has a difficulty in exhibiting the nematic phase. When the concentration of the compound (III) increases in the ferroelectric liquid crystal composition, the nematic phase disappears. Therefore, the compound (III) is preferably contained in the ferroelectric liquid crystal composition in an amount of 4 to 20 wt.%, more preferably 5 to 10 wt.%.

The optically active compounds (IV) to (VII) increase the spontaneous polarization of the liquid crystal composition and accelerate the response speed thereof. However, a high concentration of these compounds may cause problems of the increase in viscosity, precipitation of the crystal, reduction in thermal stability of the smectic C phase, or the like. When the concentration is too low, the spontaneous polarization of the composition is made too small, whereby a satisfactory response speed cannot be obtained. Accordingly, each of the compounds (IV) to (VII) is preferably contained in the ferroelectric liquid crystal composition in an amount of 0.5 to 15 wt.%, more preferably 1 to 10 wt.%. The total concentration amount of the compounds (IV) to (VII) is preferably 1 to 20 wt.%, more preferably 2 to 15 wt..%.

It is to be noted that liquid crystal compounds, optically active compounds, ionic compounds or the like can be used for the present invention as the additives other than the compounds (I) to (VII). Examples of the liquid crystal compounds are pyrimidine liquid crystal, pyridine liquid crystal, pyridazine liquid crystal, fluorine liquid crystal, or the like. The amount of the liquid crystal compounds is preferably less than 35 wt.%. Examples of the optically active compounds include those represented by the following formulae:

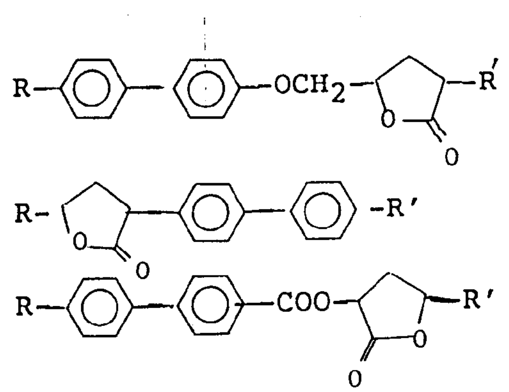

The amount of the optically active compound is usually less than 15 wt.% to the liquid crystal composition.

Examples of the ionic compounds are TCNQ (tetracyano-quinodimethane or the like. The amount of the ionic compound is preferably less than 0.5 wt.% to the liquid composition.

The total amount of the additives is generally less than 50 wt.%.

Subsequently, a liquid crystal device using the ferroelectric liquid crystal composition of the present invention will be explained with reference to the drawings.

Fig. 2 is an explanatory view showing one example of a liquid crystal device employing the ferroelectric liquid crystal composition.

Specifically, Fig. 2 is a view of a transmission the display device comprising insulating substrates 1 and 2, electrode layers 3 and 4, an insulating film 5, an orientation control layer 6, a sealant 7, a ferroelectric liquid crystal 8 and a polarizer 9.

A photo-transmissive substrate, generally a glass substrate is used for the insulating substrates 1 and 2.

Formed on the insulating substrates 1 and 2 are the transparent electrode layers 3 and 4 consisting of a conductive thin film such as ITO (Indium-Tin Oxide) and having a predetermined pattern.

Disposed generally on the electrode layers 3 and 4 is the insulating film 5 which can be omitted depending upon the occasion. The insulating film 5 can be made of, for example, an inorganic thin film such as $SiO_2$, $SiN_x$, $Al_2O_3$ or the like or an organic thin film such as polyimide. The insulating film 5 made of the inorganic thin film

can be formed by vacuum deposition process, sputtering process, CVD (Chemical Vapor Deposition) process or solution coating method. The insulating film 5 made of the organic thin film can be deposited by using a solution having an organic substance dissolved therein or a solution of its precursor with a spin-coating process, dipping process, screen printing process, roller coating process or the like. Thereafter, the deposited film is hardened under a predetermined condition (heating, exposure or the like) to form the insulating film 5.

The orientation control film 6 is formed on the insulating film 5. In the case where the insulating film 5 is omitted, the orientation control film 6 is directly formed on the electrode layers 3 and 4. The orientation control film 6 may be made of inorganic substances or organic substances.

The orientation control layer of inorganic substances is usually formed by slant deposition of silicon oxide, but can be formed by rotation deposition. The orientation control layer of organic substances can be formed by using a polymer such as nylon, polyvinylalcohol, polyimide or polyamide. The surface of the organic substance is rubbed to complete the layer.

Subsequently, tow insulating substrates are disposed opposite to each other, between which the liquid crystal is injected to produce a ferroelectric liquid crystal device.

The ferroelectric liquid crystal device in Fig. 2 is explained as a switching device having one pixel. The ferroelectric liquid crystal composition and the liquid crystal device according to the present invention can be applied to a large-capacity display device of a matrix type, wherein the wirings on the upper substrate and the wirings on the lower substrate are intersectionally placed as to provide a matrix the device as shown in Fig. 3.

Various known driving methods can be used for driving a large-capacity display device using a ferroelectric liquid crystal, such as the method disclosed in Ohnishi et al., National Technical Report, 33, pp.44, (1987). As mentioned above, the effective method is the localized rewriting method using the 1/3 driving method with the driving waveform shown in Fig. 1, in order to obtain a large-capacity display without flickering. The great problem in driving with the 1/3 driving method is that the contrast degrades due to the movement of the liquid crystal molecule by the bias voltage, which was already mentioned. However, the ferroelectric liquid crystal composition having ester liquid crystal compound as a main component can offer an excellent contrast since the molecule rarely moves by the bias voltage.

The present invention will be described in greater detail with reference to the following examples, which nevertheless in no way limit the invention.

Example 1 (Precompouding)

Non-chiral liquid crystal compositions No. 101 to No. 103 were prepared by using the compounds No. 1 to No. 11 shown in Table 2. Each composition No. 101 to No. 103 had compositions shown in Table 3 and exhibited the smectic C phase at room temperature. Table 3 also shows the phase transition temperature of each composition. The compositions No. 102 and No. 103 exhibited the INAC phase series, thus desirable. The composition No. 101 did not exhibit the smectic A phase, but can be practically used in combination with the other compounds.

Example 2 (Measurement of the Direction of Spontaneous Polarization)

A composition No. 201 comprising the compositions shown in Table 4 and exhibiting the non-chiral smectic C phase was prepared. This liquid crystal composition No. 201 exhibited the smectic C phase at room temperature. The phase transition temperature thereof was shown in Table 4. A ferroelectric liquid crystal display device was prepared by adding optically active compounds No. 301 to No. 308 shown in Table 5 in an amount of 2 wt.% respectively to the liquid crystal composition No. 201. All of the ferroelectric liquid crystal compositions thus obtained exhibited the chiral smectic C phase at room temperature and further exhibited INAC phase series.

Two glass substrates each was laminated by ITO film, $SiO_2$ insulating film and PVA film in this order. The uppermost layer was rubbed to make orientation layer. These two substrates were set to make a cell facing their orientation layers to each other, and leaving 2 μm clearance between these two layers. Liquid crystal compositions shown in Table 1 were injected respectively to the cell. The cell was then heated to a temperature to change the liquid crystal composition into an isotropic liquid and then cooled at 1°C/min, whereby ferroelectric liquid crystal display devices exhibiting good orientation were obtained. These ferroelectric liquid crystal devices were arranged between the polarized plates crossing perpendicular to each other. A rectangular waveform voltage of ±10 V was applied to the ferroelectric liquid crystal devices at room temperature. The direction of movement of the molecules was visually observed to determine the direction of the spontaneous polarization developed by each optically active compound. Table 5 shows the results.

Example 3 (Measurement of Helical Pitch)

A non-chiral nematic liquid crystal composition No. 202 comprising compositions shown in Table 6 was prepared. The composition No. 202 exhibited the nematic phase at room temperature. Table 6 shows the phase transition temperature of the composition No. 202. Chiral liquid crystal compositions were prepared by adding optically active compounds No. 301 to no. 308 shown in Table 5 in an amount of 1 wt.% respectively to the composition No. 202. These liquid crystal compositions exhibited the nematic phase at room temperature. The helical pitch of each nematic liquid crystal composition was measured by using a wedge cell. Table 5 shows 1/P (%) value which is an inverse number of the obtained pitch.

Example 4 (Measurement of the Direction of the Helical Pitch)

Nematic liquid crystal compositions were prepared by adding optically active compounds No. 301 to 308 shown in Table 5 in an amount of 10 to 40 wt.% respectively to the nematic liquid crystal composition No. 202. It has already been reported that the direction of the helical pitch which the compound No. 303 induces in the nematic phase is R(+). Further, the direction of the helical pitch which the compound No. 304 induces in the nematic phase has been reported to L(-). The nematic liquid crystal compositions added thereto the compounds No. 301 to 308 respectively was in contact with the nematic liquid crystal compositions added thereto the compound No. 303 or 304 on a prepared slide. This prepared slide was observed by a polarizing microscope, resulting in that schlieren tissues which appear only when the helical pitch becomes too longer was observed either on the case when each of the compositions having the compounds No. 301 to No. 308 added thereto was in contact with the composition having the compound No. 303 or the composition having the compound No. 304. The compound in which schlieren tissues were observed when it was in contact with the composition having the compound No. 303 added thereto was determined to have a direction L(-) of a helical pitch induced in the nematic phase. On the other hand, the compound in which schlieren tissues were observed when it was in contact with the composition having the compound No. 304 added thereto was determined to have a direction R(+) of a helical pitch induced in the nematic phase. In this way, the direction of the helical pitch induced in the nematic phase of each compound No. 301 to 308 was determined as shown in Table 5.

Example 5 (Preparation of Ferroelectric Liquid Crystal Composition)

Ferroelectric liquid crystal compositions No. 401 and 402 comprising compositions shown in Table 7 were prepared by using optically active compounds shown in Table 5, compounds (I) to (III) in Table 2 and non-chiral liquid crystal compositions in Table 3. It is known that there is a following linear addition rule about the helical pitch in the nematic phase [e.g., J.E. Adams and W.E.L. Hass, Mol. Cryst. Liq. Cryst., 16, 33 (1972)].

$$1/P = \Sigma(Ci/Pi)$$

wherein $\Sigma ci=1$, P is a pitch of mixed liquid crystal and Ci is a weight concentration of each component having an inherent pitch Pi.

The amount of the chiral compound was calculated from the above equation such that the pitch of the liquid crystal was sufficiently long. Table 8 shows the calculated values of the inverse number of the pitch in the nematic phase of the prepared ferroelectric liquid crystal composition. Each composition exhibited a sufficiently long pitch.

Example 6 (Manufacture of ferroelectric liquid crystal device)

Two glass substrates each was laminated by ITO film. Deposited thereon was a polyimide orientation film LX-1400 (manufactured by Hitachi Chemical Co., Ltd.) which was then rubbed. These two substrates were set to make a cell facing their orientation layers to each other, and leaving 2 μm clearance between these two layers. Liquid crystal compositions shown in Table 7 were injected respectively to the cell. The cell was then heated to a temperature to change the liquid crystal composition into an isotropic liquid and then cooled at 1°C/min, whereby ferroelectric liquid crystal display devices exhibiting good orientation were obtained. These ferroelectric liquid crystal devices were arranged between the polarized plates crossing perpendicular to each other to measure a response speed, tilt angle, memory angle and memory pulse width. Each phase transition temperature was measured by a polarizing microscope, while each spontaneous polarization was measured by a triangular wave method [e.g., K. Miyasato, et al., Jpn. J. Appl. Phys., 22, L661, (1983)]. Table 8 shows the results. The response speed was represented by the time required for changing the transmitted light amount in the ratio of 0 to 50%, 0 to 90% and 10 to 90% when rectangle wave of V = ±10V was applied to the cell at 25 °C. The memory pulse width was defined by the minimum pulse width capable of switching when the pulse

waveform voltage of V=±10V was applied at 25 °C.

These ferroelectric liquid crystal devices were arranged between the polarizers crossing each other. The voltage having the waveform shown in Fig. 4 was applied to observe the contrast from the transmitted light amount 5 seconds after the voltage application. The result was shown in Table 9.

## Example 7

Ferroelectric liquid crystal devices were fabricated by the same manner as in Example 6 except that the polyimide orientation film LX-1400 (manufactured by Hitachi Chemical Co., Ltd.) was replaced with PVA. Contrast of each device was measured, the result of which was shown in Table 9.

## Example 8

Ferroelectric liquid crystal devices were fabricated by the same manner as in Example 6 except that the polyimide orientation film LX-1400 (manufactured by Hitachi Chemical Co., Ltd.) was replaced with polyimide orientation film PSI-A-2001 (manufactured by Chisso Petrochemical Corporation). Contrast of each device was measured, the result of which was shown in Table 9.

As is apparent from the above, high contrast of 7 to 8 was obtained when the ferroelectric liquid crystal device comprising the ester liquid crystal composition of the present invention was driven with 1/3 bias driving method. The use of the present invention can provide a large-capacity ferroelectric liquid crystal device which exhibits high contrast compared to a conventional device showing contrast of 1.5 to 5.

Table 1

| Compound | Absolute Structure | Direction Spontaneous Polarization | Direction of Helical Pitch in Nematic Phase |
|---|---|---|---|
| Compound(IV) | R<br>S | +<br>- | L(-)<br>R(+) |
| Compound(V) | R<br>S | -<br>+ | R(-)<br>L(-) |
| Compound(VI) | R<br>S | -<br>+ | L(-)<br>R(+) |
| Compound(VII) | R<br>S | +<br>- | R(+)<br>L(-) |

Table 3

| | Composition No. 101 | No. 102 | No. 103 |
|---|---|---|---|
| Composition (wt%) | | | |
| No. 1 | 30.1 | 14.9 | 27.7 |
| No. 2 | 15.1 | 15.1 | 13.5 |
| No. 3 | 15.1 | 15.3 | 14.1 |
| No. 4 | 9.8 | 9.8 | 18.6 |
| No. 7 | | | 10.0 |
| No. 8 | 9.8 | 9.9 | 8.8 |
| No. 9 | 10.0 | 9.9 | 4.3 |
| NO.10 | 10.0 | 7.7 | 4.4 |
| No.11 | | 7.5 | 8.6 |
| Phase Transition (°C) | 51°C 94°C<br>Sc → N → I | 54°C 78°C 91°C<br>Sc → $S_A$ → N → I | 51°C 78°C 91°C<br>Sc → $S_A$ → N → I |

Table 2

| Compound No. | Structure | Phase Transition Temperature(°C) C | Sc | $S_A$ | N | I |
|---|---|---|---|---|---|---|
| No. 1 | 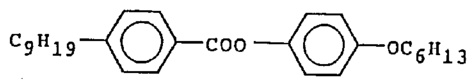 | • 41 | (•37) | – | • 64 | • |
| No. 2 | 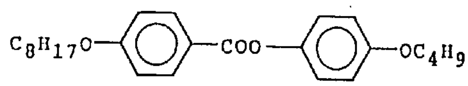 | • 58 | •60 | – | • 89 | • |
| No. 3 | 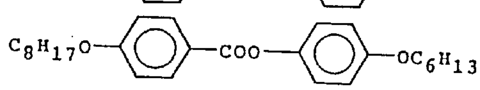 | • 55 | •66 | – | • 90 | • |
| No. 4 | 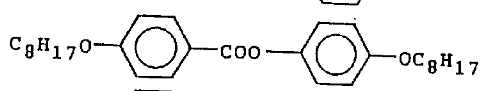 | • 61 | •73 | – | • 90 | • |
| No. 5 | 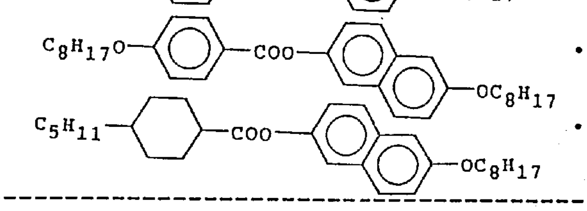 | • 70 | •83 | – | •132 | • |
| No. 6 | | • 55 | (•45) | •104 | •116 | • |
| No. 7 | 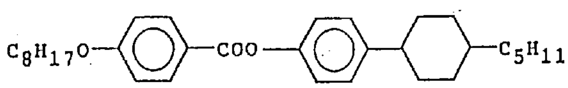 | • 82 | •100 | – | •183 | • |
| No. 8 | 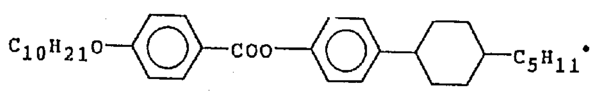 | • 73 | •120 | •127 | •170 | • |
| No. 9 | 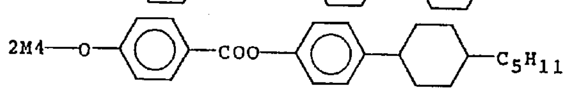 | • 97 | – | – | •164 | • |
| No. 10 | 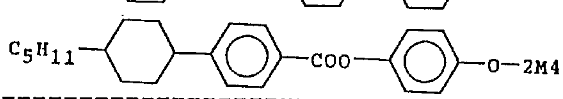 | •105 | – | •149 | •164 | • |
| No. 11 | 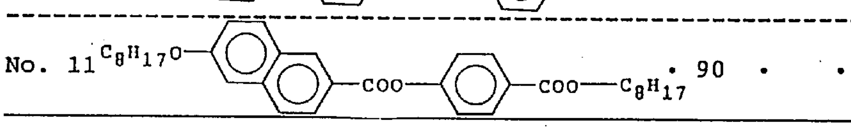 | • 90 | • | •110 | – | • |

Table 4 Composition No. 201

Sc --51°C--> $S_A$ --63°C--> N --69°C--> I

| | |
|---|---|
| 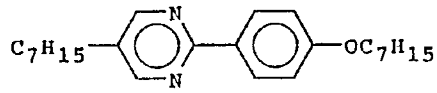 | 5% |
| 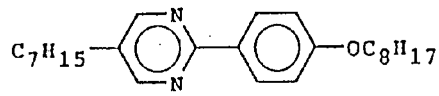 | 10% |
| 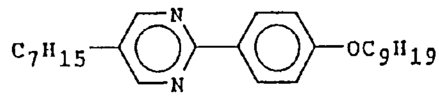 | 15% |
| 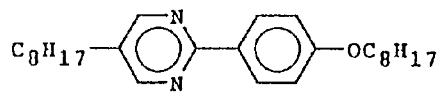 | 20% |
| 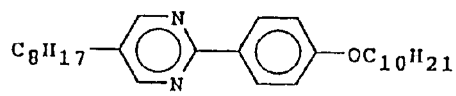 | 30% |
| 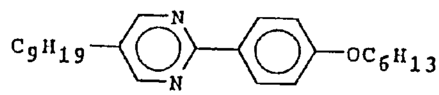 | 20% |

Table 6 Composition No. 202

N --60°C--> I

| | |
|---|---|
| 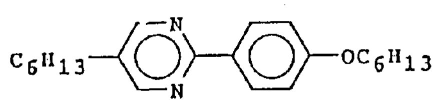 | 35% |
| 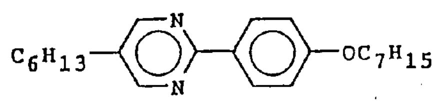 | 20% |
| 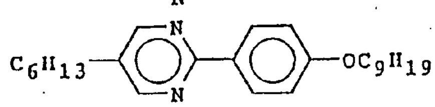 | 30% |
| 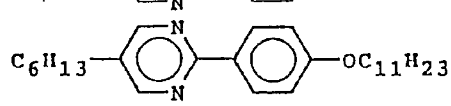 | 15% |

Table 5

| Compound No. | | Structure | Direction of Spontaneous Polarization | Direction of Pitch | 1/P(1%) (μm-1) |
|---|---|---|---|---|---|
| No. 301 | (S) | 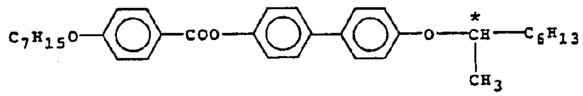 | - | R(+) | 0.0199 |
| NO. 302 | (S) | 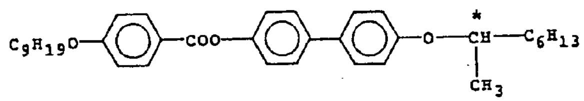 | - | R(+) | 0.0192 |
| NO. 303 | (R) | 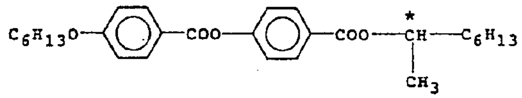 | - | R(+) | 0.0590 |
| NO. 304 | (S) | 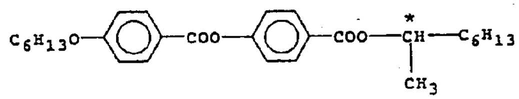 | + | L(-) | 0.0590 |
| No. 305 | (R) | 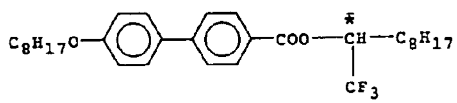 | - | L(-) | 0.0325 |
| No. 306 | (S) | 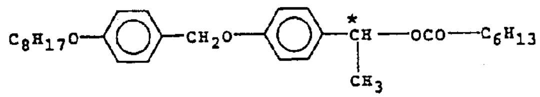 | - | L(-) | 0.0555 |
| No. 307 | (S) | 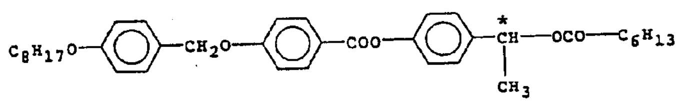 | - | L(-) | 0.0418 |
| No. 308 | (S) | 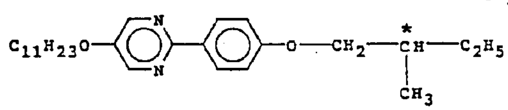 | - | R(+) | 0.0089 |

Table 7

| Compound No. | Composition No. 401 | No. 402 |
|---|---|---|
| No. 301 | 1.2 | 2.0 |
| No. 302 | | 1.5 |
| No. 303 | 1.4 | |
| No. 305 | | 0.6 |
| No. 306 | 1.2 | |
| No. 307 | 1.0 | 1.9 |
| No. 308 | | 2.6 |
| No. 5 | 4.7 | |
| No. 6 | 4.8 | |
| No. 101 | 46.5 | |
| No. 103 | 39.2 | 91.4 |

Table 8

| Composition | Phase Transition Tem. | Spontaneous Polarization ($nC/cm^2$) | Response Speed ($\mu sec$) | | | Tilt Angle $\theta$(deg) | Memory Angle $2\omega$(deg) | Memory Pulse ($\mu sec$) | | 1/P ($\mu m^{-1}$) |
|---|---|---|---|---|---|---|---|---|---|---|
| | Sc $S_A$ N I | | 0-50% | 0-90% | 10-90% | | | 0 bias | 1/3 bias | |
| No. 401 | • 42• 75• 91• | | 426 | 875 | 650 | 19 | 10 | 350 | 270 | -0.0019 |
| NO. 402 | • 38• 75• 90• | | 409 | 1212 | 899 | 17 | 10 | 450 | 400 | -0.0072 |

Table 9

| Composition | Orientation Film | Contrast given by 1/3 Bias Driving Method | Remark |
|---|---|---|---|
| No. 401 | LX-1400 | 8 | EX.6 |
| No. 402 | LX-1400 | 8 | EX.6 |
| No. 401 | PVA | 7 | EX.7 |
| No. 402 | PVA | 7.5 | EX.7 |
| No. 401 | PSI-A-2001 | 9 | EX.8 |
| No. 402 | PSI-A-2001 | 8.5 | EX.8 |

## Claims

1. A ferroelectric liquid crystal composition comprising at least one kind of compounds represented by the general formula (I):

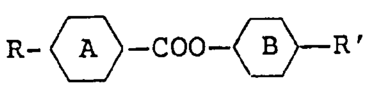

(I)

wherein

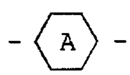

is 1,4-phenylene or 1,4-cyclohexylene,

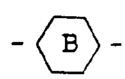

is 1,4-phenylene or 2,6-naphthylene, R and R′ are, the same or different, a straight or branched chain alkyl or alkyloxy group having 4 to 15 carbon atoms, and at least one kind of compounds represented by the general formula (II):

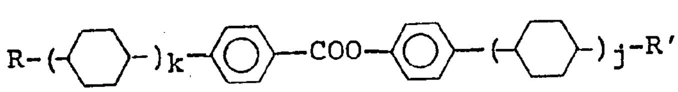

(II)

wherein k and j are independently 0 or 1 in which k + j = 1, and R and R′ are, the same or different, a straight or branched chain alkyl or alkyloxy group having 4 to 15 carbon atoms.

2. A composition of claim 1 comprising the compound of the formula (I) in an amount of 40 to 80 wt.%, the compound of the formula (II) in an amount of 10 to 50 wt.% and an additive in an amount of less than 50 wt.%.

3. A compostition of claim 1 further comprising at least one kind of compounds represented by the general formula (III):

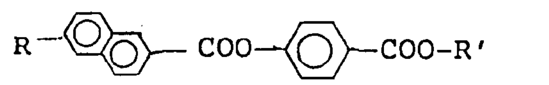

(III)

wherein R and R′ are, the same or different, a straight or branched chain alkyl or alkyloxy group having 4 to 15 carbon atoms.

4. A composition of claim 3 comprising the compound of the formula (I) in an amount of 40 to 80 wt.%, the compound of the formula (II) in an amount of 10 to 50 wt.%, the compound of the formula (III) in an amount of 4 to 20 wt.% and an additive in an amount of less than 46 wt.%.

5. A composition of claim 1 or claim 3 further comprising at least one kind selected from the group consisting of S-form of a compound represented by the general formula (IV):

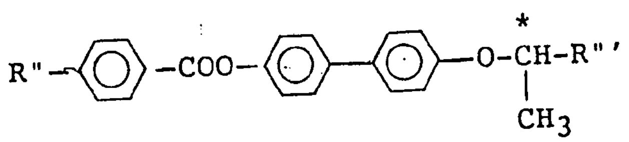

(IV)

wherein R″ is a straight or branched chain alkyl or alkyloxy group having 1 to 15 carbon atoms, R‴ is a straight or branched chain alkyl group having 2 to 15 carbon atoms, and * represents an asymmetric carbon atom, and R-form of a compound represented by the general formula (V):

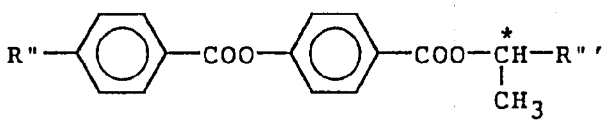

(V)

wherein R″ is a straight or branched chain alkyl or alkyloxy group having 1 to 15 carbon atoms, R‴ is a straight or branched chain alkyl group having 2 to 15 carbon atoms, and * represents an asymmetric carbon atom, and at least one kind selected from the group consisting of R-form of a compound represented by the general formula (VI):

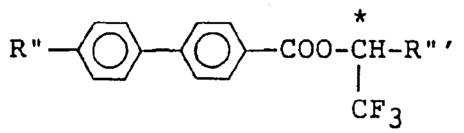

(VI)

wherein R″ is a straight or branched chain alkyl or alkyloxy group having 1 to 15 carbon atoms, R‴ is a straight or branched chain alkyl group having 2 to 15 carbon atoms, and * represents an asymmetric carbon atom, and S-form of a compound represented by the general formula (VII):

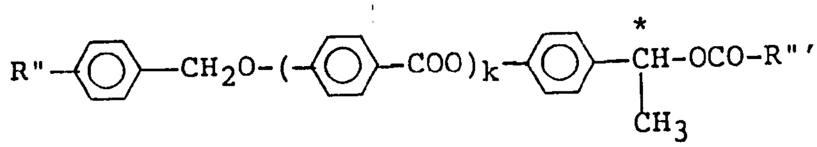

(VII)

wherein R″ is a straight or branched chain alkyl or alkyloxy group having 1 to 15 carbon atoms, R‴ is a straight or branched chain alkyl group having 2 to 15 carbon atoms, k is an integer of 0 or 1, and * represents an asymmetric carbon atom.

6. A composition of claim 5 comprising the compound of the formula (I) in an amount of 40 to 80 wt.%, the compound of the formula (II) in an amount of 10 to 50 wt.%, the S-form of the compound of the formula (IV) or the R-form of the compound of the formula (V) in an amount of 0.5 to 15 wt.% respectively, the R-form of the compound of the formula (VI) or the S-form of the compound of the formula (VII) in an amount of 0.5 to 15 wt.% respectively and an additive in an amount of less than 49 wt.%.

7. A composition of claim 5 comprising the compound of the formula (I) in an amount of 40 to 80 wt.%, the compound of the formula (II) in an amount of 10 to 50 wt.%, the compound of the formula (III) in an amount of 4 to 20 wt.%, the S-form of the compound of the formula (IV) or the R-form of the compound of the formula (V) in an amount of 0.5 to 15 wt.% respectively, the R-form of the compound of the formula (VI) or the S-form of the compound of the formula (VII) in an amount of 0.5 to 15 wt.% respectively and an additive in an amount of less than 45 wt.%.

8. A composition of claim 1 or 3 further comprising at least one kind selected from the group consisting of R-form of a compound (IV) and S-form of a compound (V) and at least one kind selected from the group consisting of S-form of a compound (VI) and R-form of a compound (VII).

9. A composition of claim 8 comprising the compound of the formula (I) in an amount of 40 to 80 wt.%, the compound of the formula (II) in an amount of 10 to 50 wt.%, the R-form of the compound of the formula (IV) or the S-form of the compound of the formula (V) in an amount of 0.5 to 15 wt.% respectively, the S-form of the compound of the formula (VI) or the R-form of the compound of the formula (VII) in an amount of 0.5 to 15 wt.% respectively and an additive in an amount of less than 49 wt.%.

10. A composition of claim 8 comprising the compound of the formula (I) in an amount of 40 to 80 wt.%, the compound of the formula (II) in an amount of 10 to 50 wt.%, the compound of the formula (III) in an amount of 4 to 20 wt.%, the R-form of the compound of the formula (IV) or the S-form of the compound of the formula (V) in an amount of 0.5 to 15 wt.% respectively, the S-form of the compound of the formula (VI) or the R-form of the compound of the formula (VII) in an amount of 0.5 to 15 wt.% respectively and an additive in an amount of less than 45 wt.%.

11. A composition of any of claim 1 to claim 10 which exhibits at least a chiral nematic phase, smectic A phase and chiral smectic C phase at a low temperature side of isotropic liquid.

12. A ferroelectric liquid crystal device comprising a pair of substrates for liquid crystal, an electrode layer deposited on each substrate and an orientation control layer deposited on the electrode layer, said substrates being disposed opposite to each other, between which the ferroelectric liquid crystal composition of any of claim 1 to claim 11 is injected.

13. A liquid crystal display device comprising a liquid crystal substrate having a plurality of scanning electrodes arranged parallel on at least its surface and a liquid crystal substrate having a plurality of signal electrodes arranged parallel on at least its surface, both substrates being disposed opposite to each other to have a space therebetween such that the scanning electrodes and the signal electrodes intersect with each other, said space being filled with the ferroelectric liquid crystal composition set forth in any of claim 1 to claim 11,

said display device being driven by a method comprising:

defining the ferroelectric liquid crystal at the portion where the scanning electrodes and signal electrodes intersect with each other as a pixel;

applying, in a line sequential manner, to the signal electrodes a signal voltage having a waveform

corresponding to display data, while to the scanning electrodes a selecrive voltage having a waveform capable of rewriting the display of the pixel on the electrodes thereof, in which the voltage that is one-third of that applied to the ferroelectric liquid crystal for rewriting the display of the pixel is applied to the ferroelectric liquid crystal when the display of the pixel is not rewritten.

FIG. 1

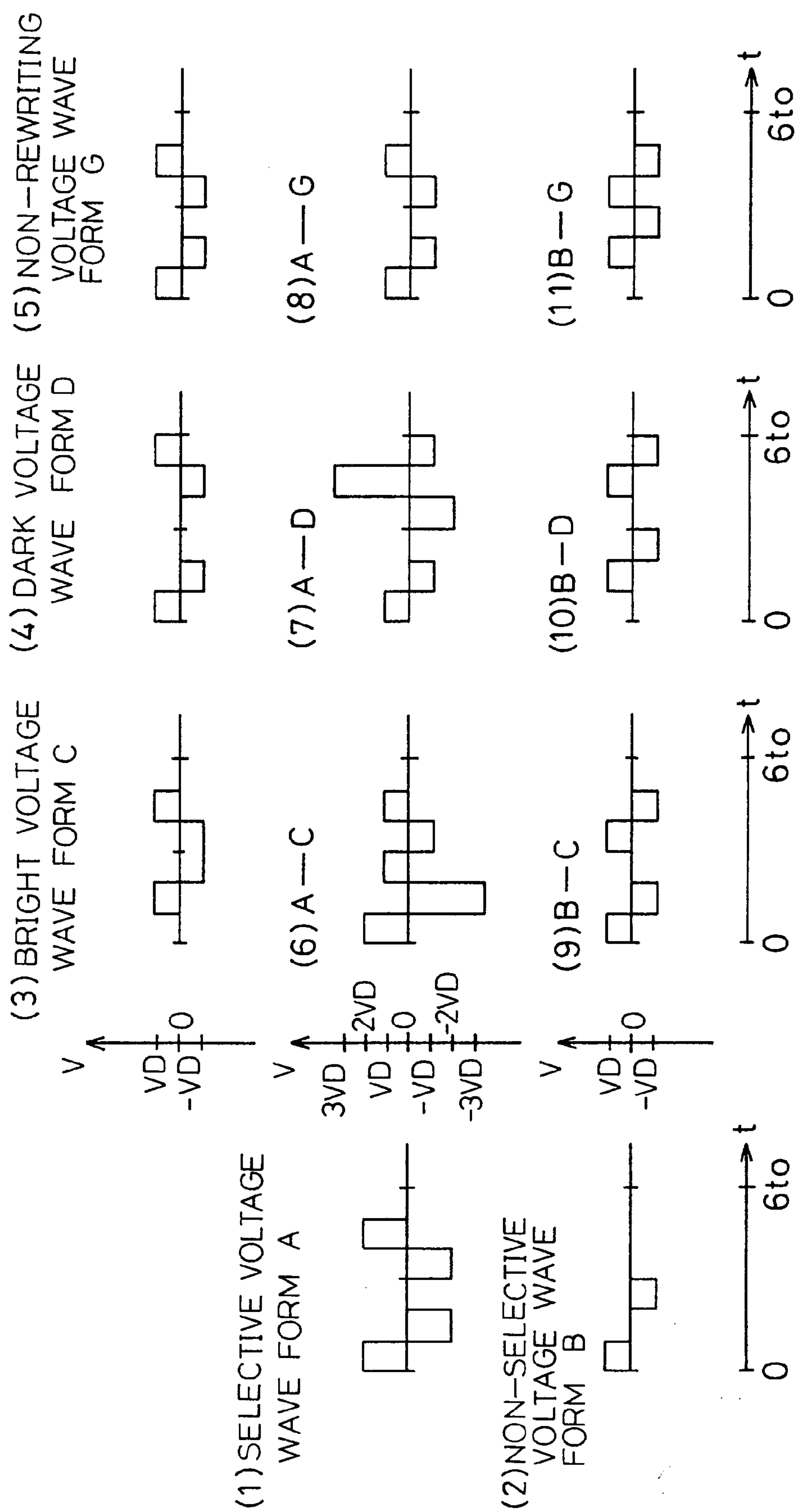
(1) SELECTIVE VOLTAGE WAVE FORM A
(2) NON-SELECTIVE VOLTAGE WAVE FORM B
(3) BRIGHT VOLTAGE WAVE FORM C
(4) DARK VOLTAGE WAVE FORM D
(5) NON-REWRITING VOLTAGE WAVE FORM G
(6) A — C
(7) A — D
(8) A — G
(9) B — C
(10) B — D
(11) B — G
V
VD
-VD
0
3VD
2VD
-2VD
-3VD
t
6to

FIG. 2

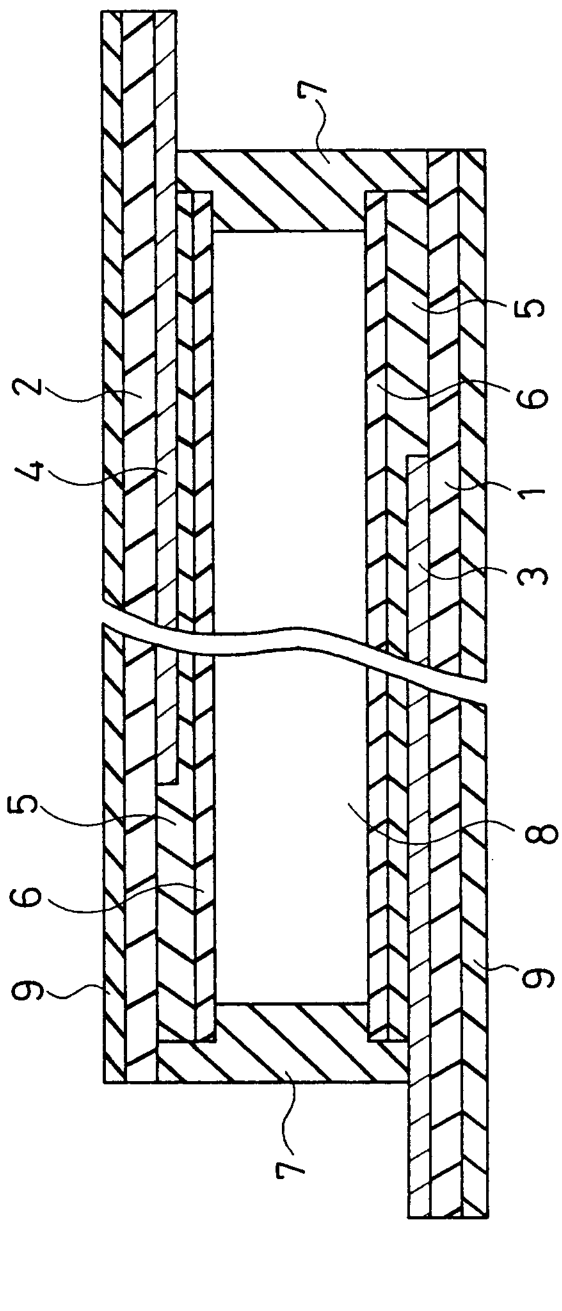

FIG.3

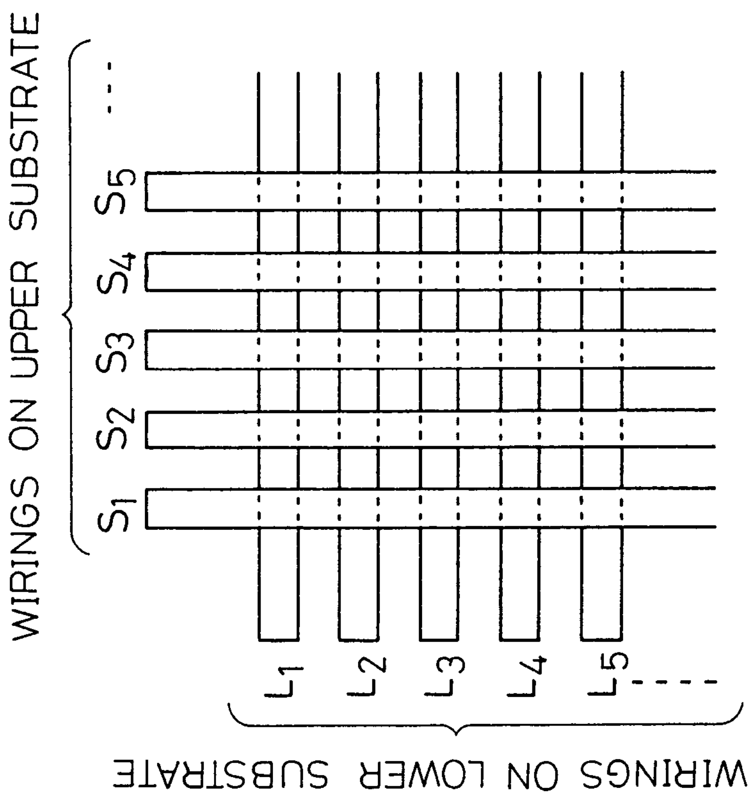
WIRINGS ON UPPER SUBSTRATE
$S_1$
$S_2$
$S_3$
$S_4$
$S_5$
$L_1$
$L_2$
$L_3$
$L_4$
$L_5$
WIRINGS ON LOWER SUBSTRATE

FIG.4

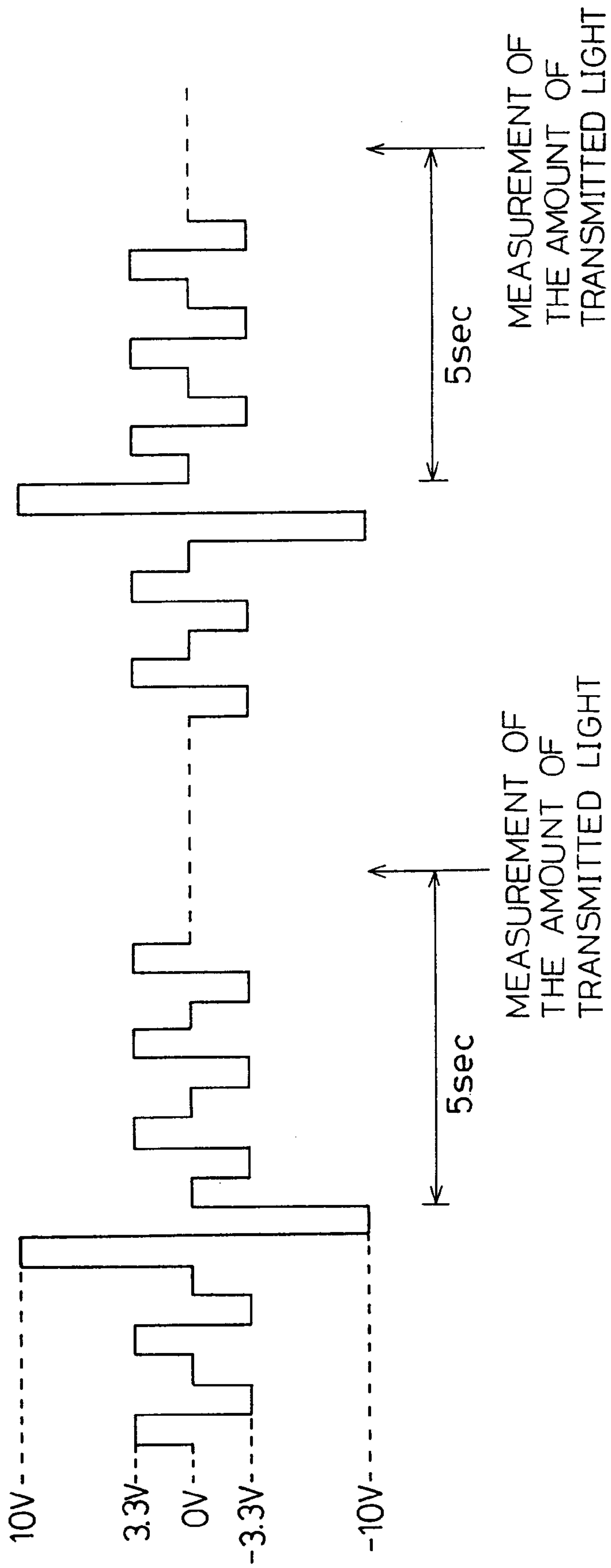
10V
3.3V
0V
-3.3V
-10V
5sec
MEASUREMENT OF
THE AMOUNT OF
TRANSMITTED LIGHT
5sec
MEASUREMENT OF
THE AMOUNT OF
TRANSMITTED LIGHT